# EUROPEAN PATENT SPECIFICATION

(11) **EP 4 432 495 B1**
(45) Date of publication and mention of the grant of the patent: **02.12.2026**
(21) Application number: 24177628.5
(22) Date of filing: 27.06.2022
(51) Int. Cl.: E02F 5/10, H02G 1/10

(54) **APPARATUS FOR INSERTING AN ELONGATE OBJECT INTO A TRENCH**
VORRICHTUNG ZUM EINBRINGEN EINES LÄNGLICHEN GEGENSTANDES IN EINEN GRABEN
APPAREIL POUR INTRODUIRE UN OBJET ALLONGÉ DANS UNE TRANCHÉE

(30) Priority: 28.06.2021 EP 21182054; 09.09.2021 GB 202112876
(43) Date of publication of application: 18.09.2024
(62) Document number(s) of the earlier application(s) in accordance with Art. 76 EPC: 22181186.2 / 4 112 821
(73) Proprietor: Soil Machine Dynamics Limited, Tyne and Wear NE28 6UZ (GB)
(72) Inventor: WHITE, Roger Paul, Tyne and Wear NE28 6UZ (GB)
(74) Representative: Murgitroyd & Company

(56) References cited:
- EP-A1- 3 121 917
- EP-A1- 3 397 816
- WO-A1-2021/094193

## Description

The present disclosure relates to an apparatus for inserting an elongate object into a trench in a floor in a of body of water and relates to particularly, but not exclusively, to an apparatus for inserting a cable into a trench in the seabed.

Apparatus are known for burying cables in the seabed, and consist of a plough having a plough share which forms a trench in the seabed into which the cable is inserted by the plough. However, such ploughs involve loading the cable into the plough by means of a crane manipulator having a cable grab, and a tipping cable trough for manipulating the cable into the plough. Such arrangements suffer from the drawback that in the case of delicate cables, such as lead-lined cables, there is a risk of damage to the cable.

WO2021/094193 discloses a device for providing an elongate element in a seabed. EP3121917 discloses a plough for burying a cable in a trench in the seabed. EP3397816 discloses a plough for providing a subsea channel and a method of using.

Preferred embodiments of the present disclosure seek to overcome one or more of the above disadvantages.

The invention is as claimed in the claims.

According to an aspect of the present disclosure, there is provided an apparatus for inserting an elongate object into a trench in a floor in a body of water, the apparatus comprising:-
trench-forming means for forming a trench in a floor of a body of water;
attachment means for enabling attachment of at least one tensile member to the apparatus, wherein the attachment means is moveable relative to the trench-forming means between a first position, in which the apparatus is adapted to be towed by at least one said tensile member to move the trench-forming means relative to the floor of the body of water to form a trench therein, and a second position, in which the apparatus is adapted to be supported by at least one said tensile member to enable the apparatus to be deployed to the floor of the body of water; and
receiving means for receiving at least part of an elongate object to be inserted into the trench;
wherein the attachment means is moveable relative to the trench-forming means between the second position and a third position, to enable at least part of the elongate object to be received in the receiving means from a side of the apparatus remote from the trench-forming means.

By providing attachment means moveable relative to the trench-forming means between the second position and a third position, to enable at least part of the elongate object to be received in the receiving means from a side of the apparatus remote from the trench-forming means, this provides the advantage of reducing the risk of damage to the elongate object, by avoiding the need to manipulate the elongate object with cable grabs, and reducing the time taken to load the elongate object into the apparatus, since the elongate object can be loaded into the apparatus from above.

The attachment means may be adapted to be attached to each of a plurality of tensile members at a respective location, and the position of at least one said location may be adjustable relative to the trench-forming means.

This provides the advantage of enabling an effective hitch point of the apparatus to be adjusted, as a result of which the apparatus can be steered by means of a single cable attached to a plurality of said tensile members.

The attachment means may be pivotable between the first and second positions. This provides the advantage of enabling easy movement of the attachment means between the first and second positions by means of actuators.

The attachment means may be pivotable between the second and third positions.

The apparatus comprises urging means for urging the elongate object into the trench formed by the trench-forming means.

The urging means are moveable between a fourth position in which the urging means is adapted to urge the elongate object into the trench formed by the trench-forming means, and a fifth position to enable at least part of the elongate object to be received in the receiving means from a side of the apparatus remote from the trench-forming means.

Movement of the attachments means from the second position to the third position causes movement of the urging means from the fourth position to the fifth position.

This provides the advantage of simplifying the construction of the apparatus.

The apparatus may further comprise guide means for guiding the elongate object into the receiving means.

This provides the advantage of reducing the risk of damage to the elongate object. The trench-forming means may further comprise a plurality of nozzles for emitting water jets.

A plurality of said nozzles may be selectively operable.

This provides the advantage of improving efficiency of operation of jetting.

The apparatus may further comprise floor engaging means for engaging the floor of the body of water.

The floor engaging means may comprise a plurality of first floor engaging members for engaging the floor of the body of water forwards of the trench-forming means.

The floor-engaging means may further comprise second floor engaging members for engaging the floor of the body of water rearwardly of the first floor engaging means.

This provides the advantage of enabling sinking of the trench-forming means into a soft floor of the body of water to be controlled, and stability in deployment and recovery of the apparatus from the floor of a body of water to be improved.

The position of the floor engaging means relative to the trench-forming means may be adjustable.

The apparatus may further comprise bend limiting means for limiting bending of the elongate object at an inlet to the receiving means.

This provides the advantage of further reducing the risk of damage to the elongate object by preventing bending of the elongate object around a bend radius less than a predetermined value.

The height of an inlet to the bend limiting means may be adjustable relative to the trench-forming means.

This provides the advantage of enabling greater trench depths, because the entry height of the elongate object to the bend limiting means can be minimised during shallow trenching or when transitioning to and from full depth.

The apparatus may further comprise retaining means mounted to the body forwards of the trench forming means and having a released condition, enabling insertion of an elongate object into the retaining means from a side of the body remote from the trench forming means, and a retaining condition, for retaining an elongate object in the retaining means.

The retaining means may be adapted to prevent the attachment means from coming into contact with an elongate object retained in said retaining means in a retaining condition thereof.

The retaining means may comprise at least one retaining member mounted to the body and moveable between released and retaining conditions thereof.

At least one said retaining member may be pivotably moveable between released and retaining conditions thereof.

According to another aspect of the present disclosure, there is provided an apparatus for inserting an elongate object into a trench in a floor in a body of water, the apparatus comprising:-
a body;
trench-forming means mounted to the body for forming a trench in a floor of a body of water;
receiving means for receiving at least part of an elongate object to be inserted into the trench from a side of the body remote from the trench-forming means; and
retaining means mounted to the body forwards of the trench forming means and having a released condition, enabling insertion of an elongate object into the retaining means from a side of the body remote from the trench forming means, and a retaining condition, for retaining an elongate object in the retaining means.

By providing retaining means mounted to the body forwards of the trench forming means and having a released condition, enabling insertion of an elongate object into the retaining means from a side of the body remote from the trench forming means, and a retaining condition, for retaining an elongate object in the retaining means, this provides the advantage of minimising the risk of damage to the elongate object, for example when moving an attachment means relative to the trench-forming means between its second position and its third position.

The retaining means may comprise at least one retaining member mounted to the body and moveable between released and retaining conditions thereof.

At least one said retaining member may be pivotably moveable between released and retaining conditions thereof.

The apparatus may further comprise attachment means for enabling attachment of at least one tensile member to the apparatus, wherein the attachment means is moveable relative to the trench-forming means between a first position, in which the apparatus is adapted to be towed by at least one said tensile member to move the trench-forming means relative to the floor of the body of water to form a trench therein, and a second position, in which the apparatus is adapted to be supported by at least one said tensile member to enable the apparatus to be deployed to the floor of the body of water; and
receiving means for receiving at least part of an elongate object to be inserted into the trench;
wherein the attachment means is moveable relative to the trench-forming means between the second position and a third position, to enable at least part of the elongate object to be received in the receiving means from a side of the apparatus remote from the trench-forming means.

The retaining means may be adapted to prevent the attachment means from coming into contact with an elongate object retained in said retaining means in a retaining condition thereof.

The attachment means may be adapted to be attached to each of a plurality of tensile members at a respective location, and the position of at least one said location is adjustable relative to the trench-forming means.

The attachment means may be pivotable between the first and second positions.

The attachment means may be pivotable between the second and third positions.

The apparatus may further comprise urging means for urging the elongate object into the trench formed by the trench-forming means.

The urging means may be moveable between a fourth position in which the urging means is adapted to urge the elongate object into the trench formed by the trench-forming means, and a fifth position to enable at least part of the elongate object to be received in the receiving means from a side of the apparatus remote from the trench-forming means.

Movement of the attachments means from the second position to the third position may cause movement of the urging means from the fourth position to the fifth position.

The apparatus may further comprise guide means for guiding the elongate object into the receiving means.

The trench-forming means may further comprise a plurality of nozzles for emitting water jets.

A plurality of said nozzles may be selectively operable.

The apparatus may further comprise floor engaging means for engaging the floor of the body of water.

The floor engaging means may comprise a plurality of first floor engaging members for engaging the floor of the body of water forwards of the trench-forming means. The floor-engaging means may further comprise second floor engaging members for engaging the floor of the body of water rearwardly of the first floor engaging means.

The position of the floor engaging means relative to the trench-forming means may be adjustable.

The apparatus may further comprise bend limiting means for limiting bending of the elongate object at an inlet to the receiving means.

A height of an inlet to the bend limiting means may be adjustable relative to the trench-forming means.

Preferred embodiments of the disclosure will now be described, by way of example only and not in any limitative sense, with reference to the accompanying drawings, in which:-
Figures 1A to 1C show respectively a front, top and side view of a plough of a first embodiment in a lifting mode;
Figures 2A to 2C show respectively a front, top and side view of the plough of Figure 1 in a loading mode with a cable being loaded into the plough;
Figures 3A to 3C show respectively a front, top and side view of the plough of Figure 1 in a ploughing mode with the cable loaded into the plough;
Figures 4A to 4C show the plough of Figure 3 in its full depth ploughing condition;
Figures 5A to 5C show respectively a front, top and side view of a plough of a second embodiment in a lifting mode;
Figures 6A to 6C show respectively a front, top and side view of the plough of Figure 5 in a loading mode with a cable being loaded into the plough;
Figures 7A to 7C show respectively a front, top and side view of the plough of Figure 5 in a ploughing mode with the cable loaded into the plough;
Figures 8A and 8B show the plough of Figure 7 in its full depth ploughing condition;
Figures 9A to 9C show respectively a front, top and side view of a plough of a third embodiment in a lifting mode;
Figures 10A to 10C show respectively a front, top and side view of the plough of Figure 9 in a loading mode with a cable being loaded into the plough;
Figures 11A to 11C show respectively a front, top and side view of the plough of Figure 9 in a ploughing mode with the cable loaded into the plough;
Figures 12A to 12C show respectively a front, top and side view of the plough of Figure 9 in its full depth ploughing condition;
Figures 13A to 13C show respectively a front, top and side view of a plough of a fourth embodiment in a lifting mode;
Figures 14A to 14C show respectively a front, top and side view of the plough of Figure 13 in a loading mode with a cable being loaded into the plough;
Figures 15A to 15C show respectively a front, top and side view of the plough of Figure 13 in a ploughing mode with the cable loaded into the plough; and
Figures 16A and 16B show the plough of Figure 13 in its full depth ploughing condition.

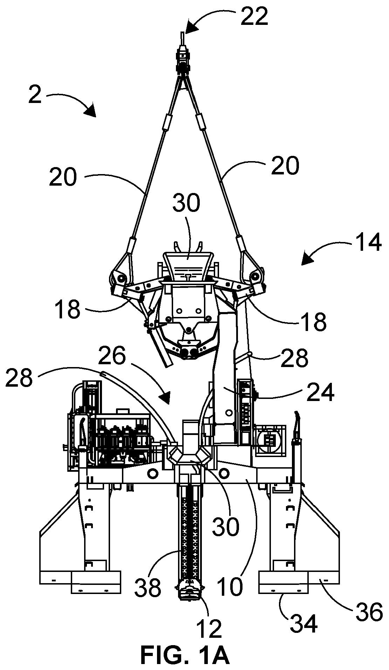

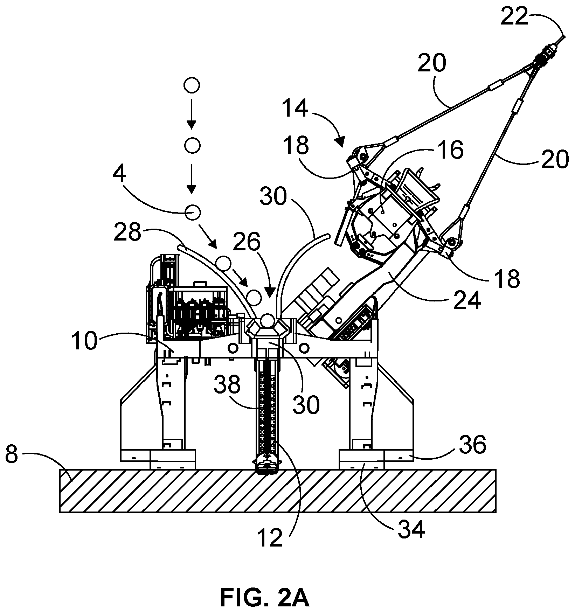

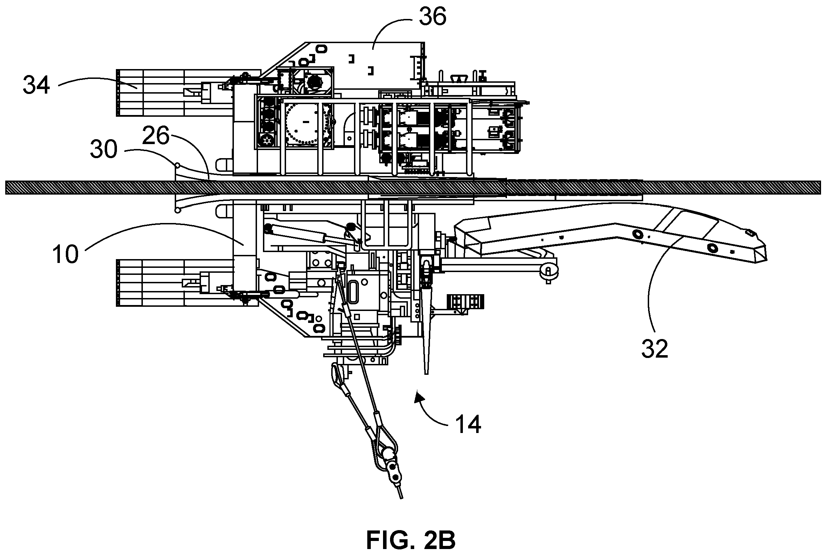

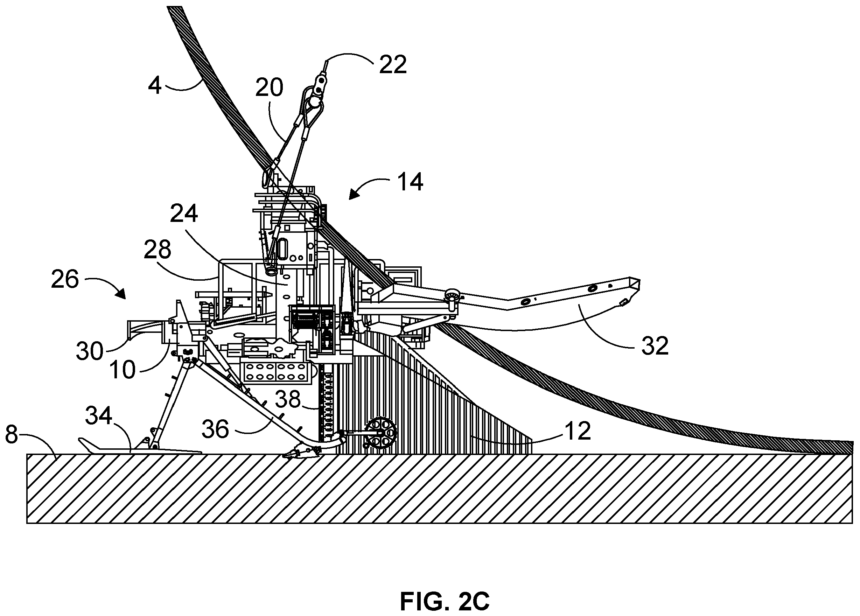

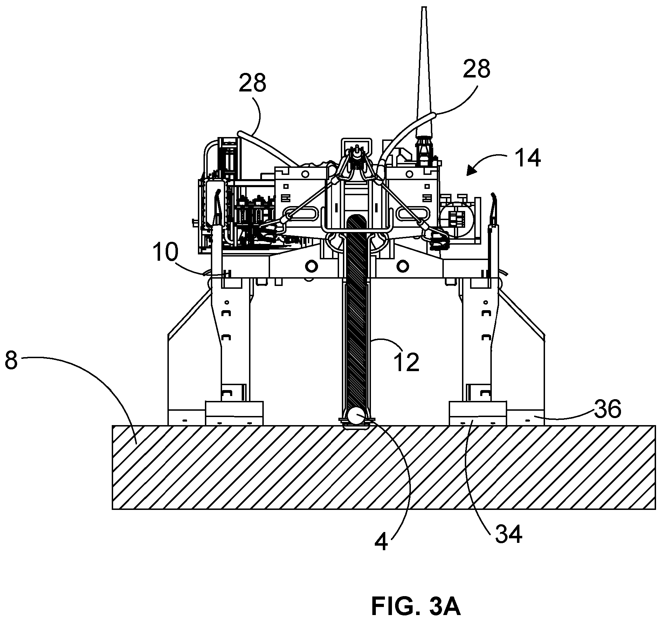

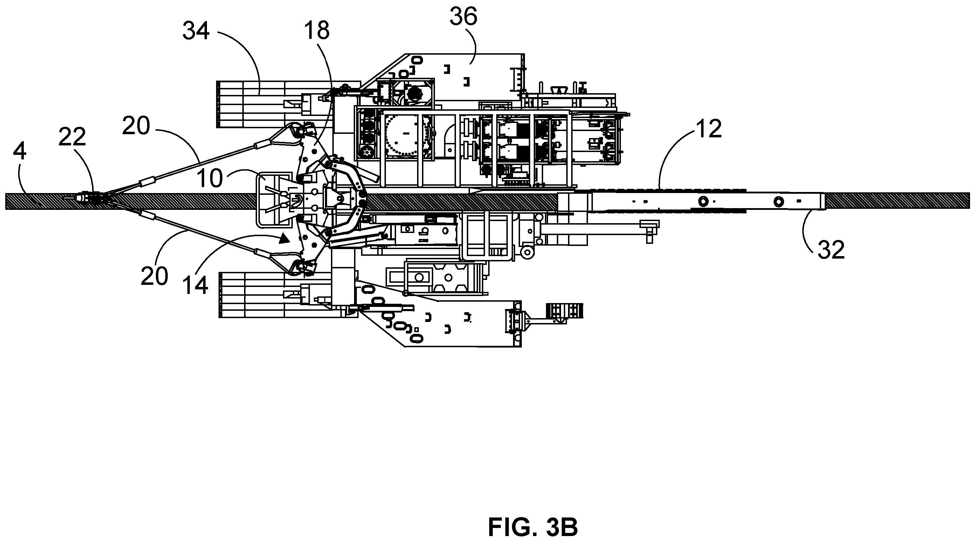

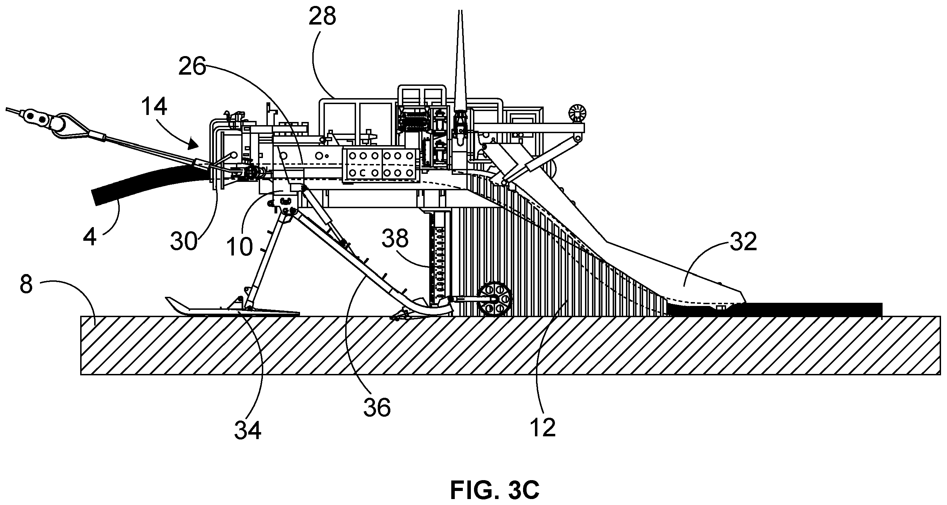

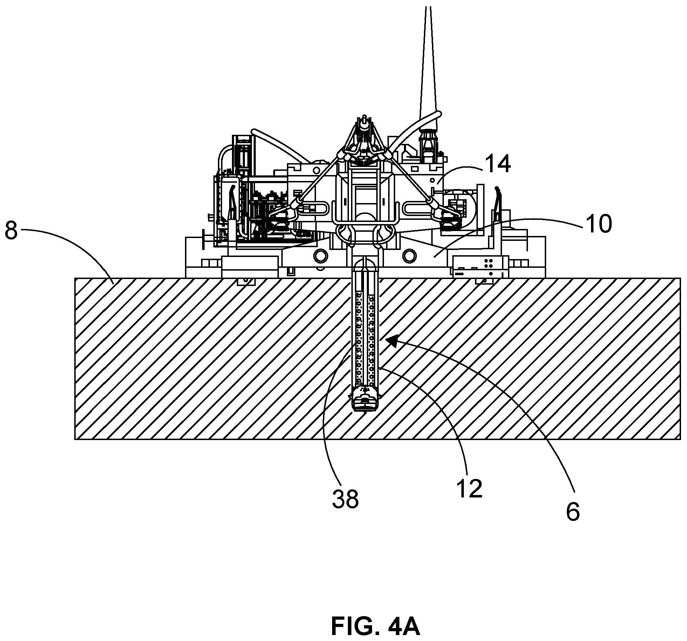

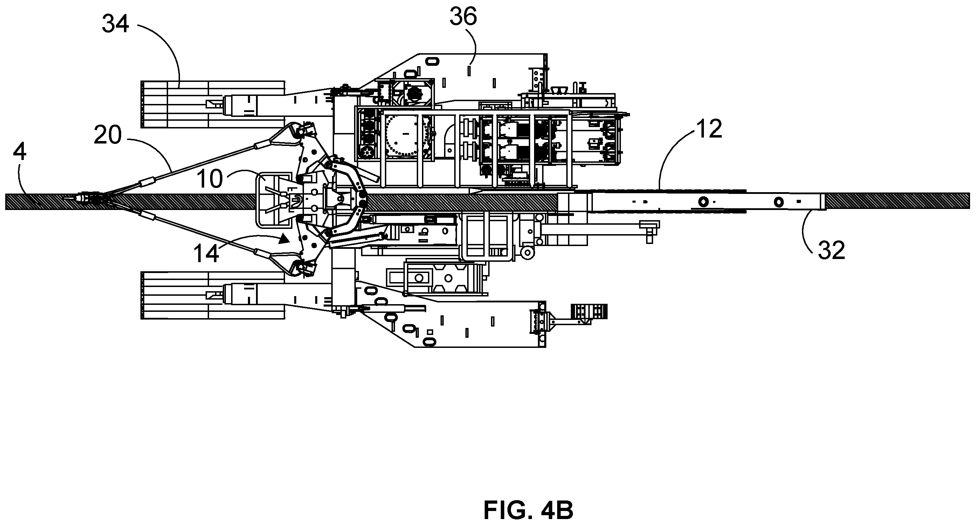

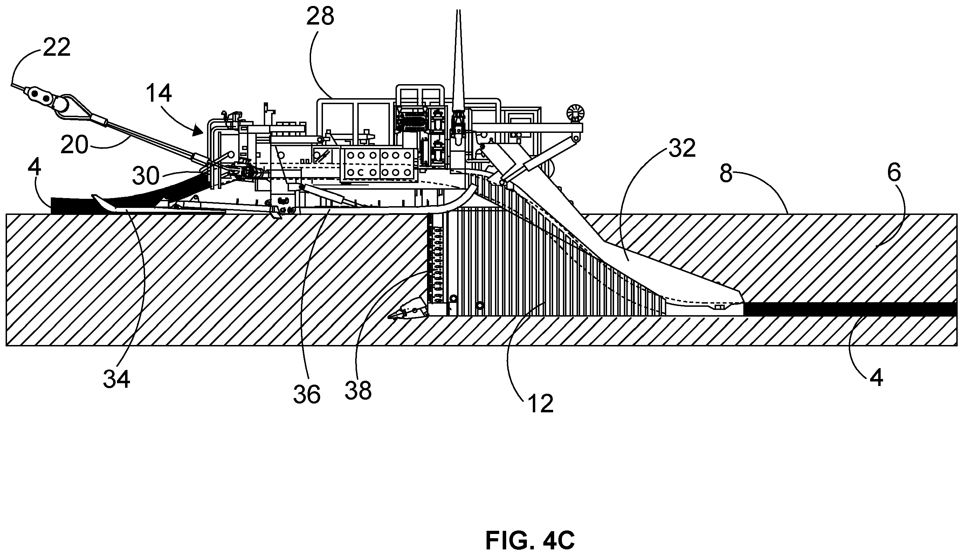

Referring to Figures 1A to 1C, an apparatus in the form a plough 2 for inserting an elongate object in the form of a cable 4 (Figures 2 to 4) into a trench 6 (Figure 4) in the seabed 8 has a body 10 which supports trench-forming means in the form a plough share 12 for forming the trench 6 in the seabed 8. The plough 2 has attachment means in the form of a drawbar 14 having an attachment part 16, including a pair of attachment locations 18 for respective tensile members 20 forming part of a towing cable 22 for towing the plough 2 (Figures 3 and 4), and a support member 24 pivotably attached to the attachment part 16 at one end and to the body 10 at the other end. The attachment locations 18 are pivotable relative to the support member 24, as a result of which the effective hitch point of the towing cable 22 is adjustable by pivoting one or both of the attachment locations 18 about their respective pivot axes.

Receiving means in the form of a cable path 26 is provided in an upper part of the body 10 on an opposite side of the body 10 to the plough share 12, and guide means in the form of curved cable guides 28 is provided at the inlet to the cable path 26, to assist in guiding the cable 4 into the cable path 26 and to minimise the risk of damage to the cable 4. Bend limiting means in the form of a bellmouth 30 is provided at an inlet to the cable path 26, to prevent bending of the cable 4 around a bend radius smaller than a predetermined value.

Urging means in the form of a depressor 32 is provided rearwardly of and above the cable path 26 and is pivotably mounted to a lower part of the support member 24 so that the depressor 32 is pivotable relative to the body 10 to urge the cable 4 into a trench 6 formed in the seabed 8 by the plough share 12. The depressor 32 is also pivotable between a fourth position, in which it is located above and rearwardly of the cable path 28 to urge the cable 4 into the trench 6, and a fifth position, in which it is moved out of the way of the cable path 28 to enable the cable 4 to be located in the cable path 28 from above the plough 2.

Floor engaging means in the form of front skids 34 and rear skids 36 is pivotably mounted to the body 10 at a forward part of the body 10. The height of the plough share 12 can be adjusted by pivoting the front skids 34 relative to the body 10, and the rear skids 36 provide stability while deploying the plough 2 to and recovering the plough 2 from the seabed 8.

A row of jetting nozzles 38 is provided at a forward edge of the plough share 12, for emitting water jets to assist in breaking soil when the trench 6 is formed by the plough share 12. Water can be selectively jetted from some or all of the nozzles 38, therefore increasing the efficiency of operation of the jetting nozzles 38.

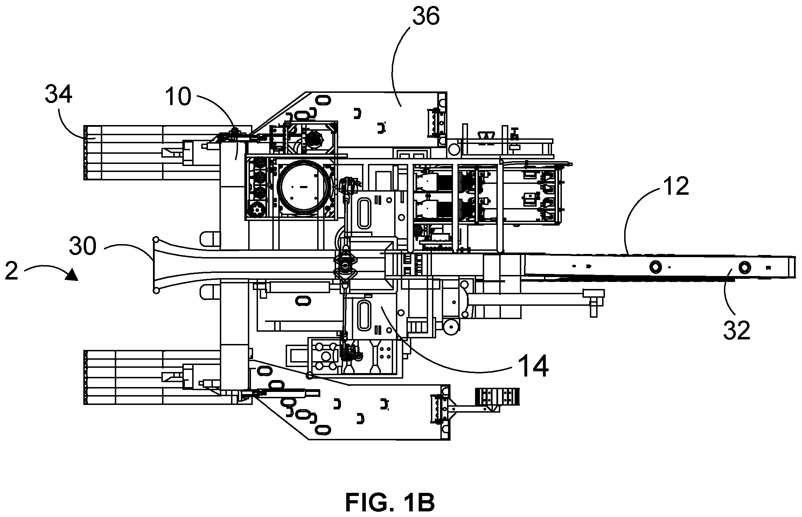

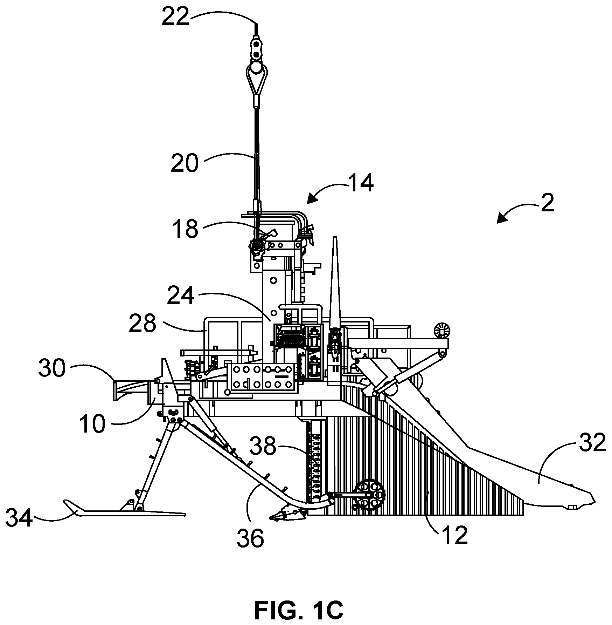

The drawbar 14 is pivotable relative to the body 10 about a first axis between a first position, in which the plough 2 is in its ploughing mode (Figures 3 and 4) and in which the plough 2 can be towed by the towing cable 22 to cause the plough share 12 to form a trench 6 in the seabed 8 into which the cable 4 is inserted by means of the depressor 32, and a second position (Figure 1) in which the plough 2 is in its lifting mode and can be deployed to or recovered from the seabed 8 by means of the towing cable 22. This enables a single towing cable 22 to be used for deploying and recovery of the plough 2 to the seabed 8 and for towing the plough 2 to enable a cable 4 to be buried in the seabed 8.

The drawbar 14 is also pivotable relative to the body 10 about a second axis, generally perpendicular to the first axis, between the second position and a third position (Figure 2), in which the cable 4 to be buried can be inserted into the cable path 26 from above the plough 2.

The operation of the plough 2 of Figures 1 to 4 will now be described.

Referring to Figure 1, the plough 2 is initially deployed from a surface vessel (not shown) to the seabed 8 by means of the towing cable 22 supporting the plough 2, the plough 2 being in its lifting mode in which the drawbar 14 is located in its second position. The plough 2 is located on the seabed 8, and the front 34 and rear 36 skids support the plough 2 so that the plough share 12 does not sink into the seabed 8.

The drawbar 14 is then pivoted from the second position to the third position ( Figure 2), and because the depressor 32 is mounted to the drawbar 14, pivoting of the drawbar 14 from the second position to the third position causes pivoting of the depressor 32 from the fourth position to the fifth position to enable access the rear part of the cable path 26. The cable 4 is then introduced into the cable path 26 from above (Figure 3), and the cable guides 28 assist in guiding the cable 4 into the cable path 26. Once the cable 4 is located in the cable path 26, the drawbar 14 is pivoted from the third position back to the second position which in turn causes the depressor 32 to be pivoted from the fifth position back to the fourth position, so that the drawbar 14 and depressor 32 are located above the cable path 26. The drawbar 14 is then pivoted relative to the body 10 into its first position, and the depth of ploughing by the plough share 12 is then selected by means of suitable selection of the orientation of the rear 36 and front 34 skids relative to the body 10.

The plough 2 is then towed by means of the towing cable 22, to cause the plough share 12 to form a trench 6 in the seabed 8, and the cable 4 passes from the cable path 26 into the trench 6 and is urged into the trench 6 by the depressor 32. Formation of the trench 6 is assisted by water jets from jetting nozzles 38 on the forward edge of the plough share 12, and the efficiency of jetting can be improved by suitable selection of predetermined jetting nozzles 38.

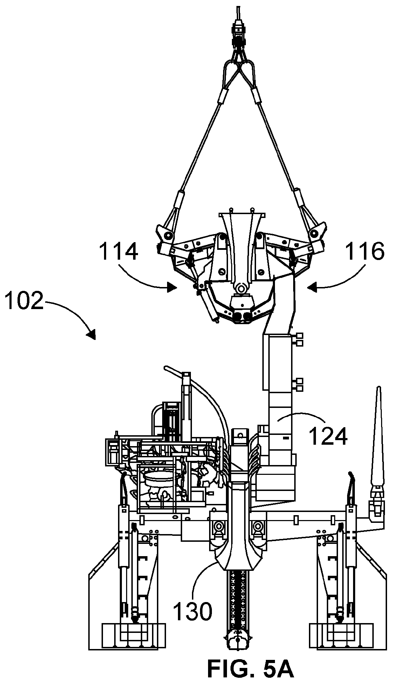

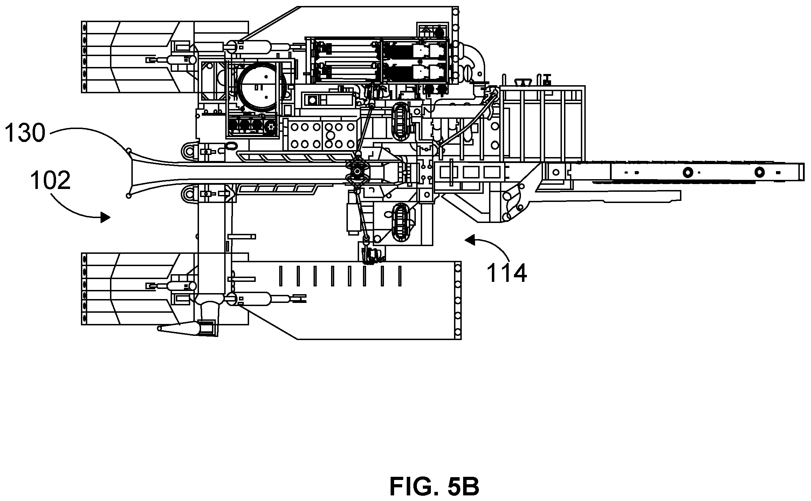

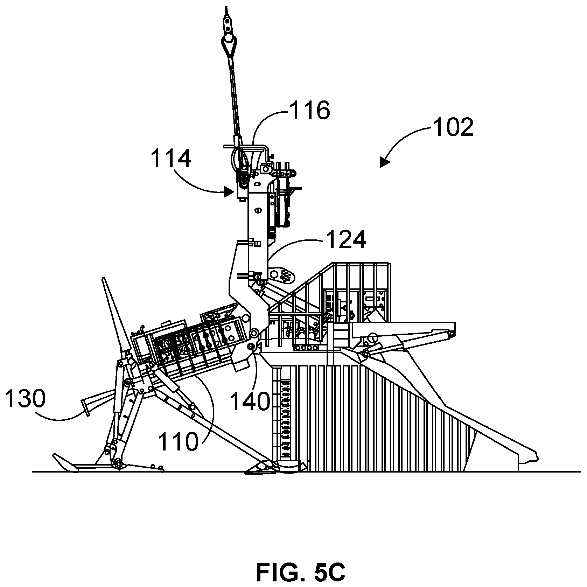

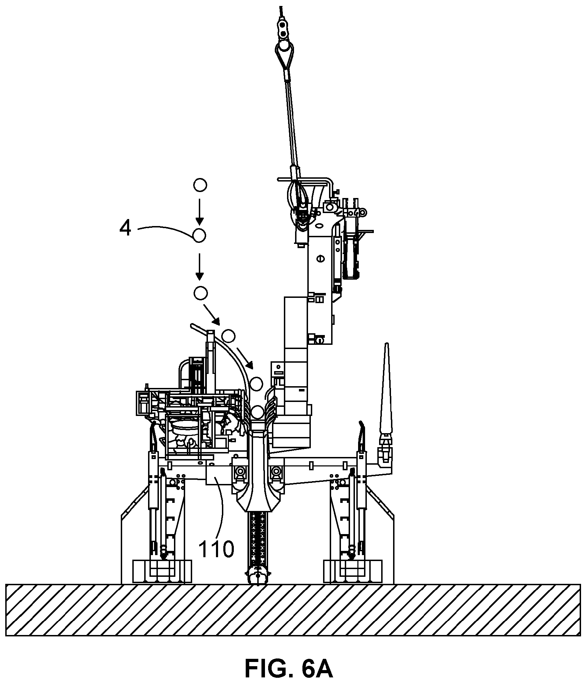

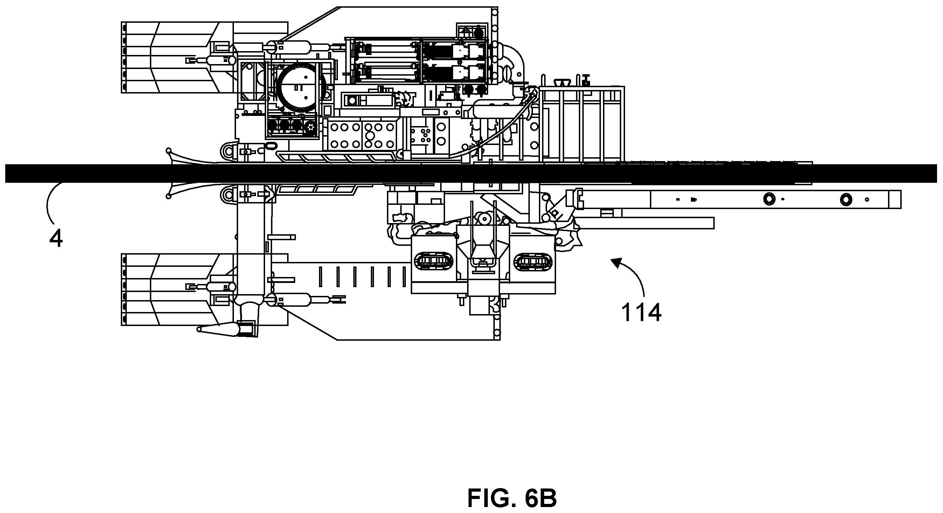

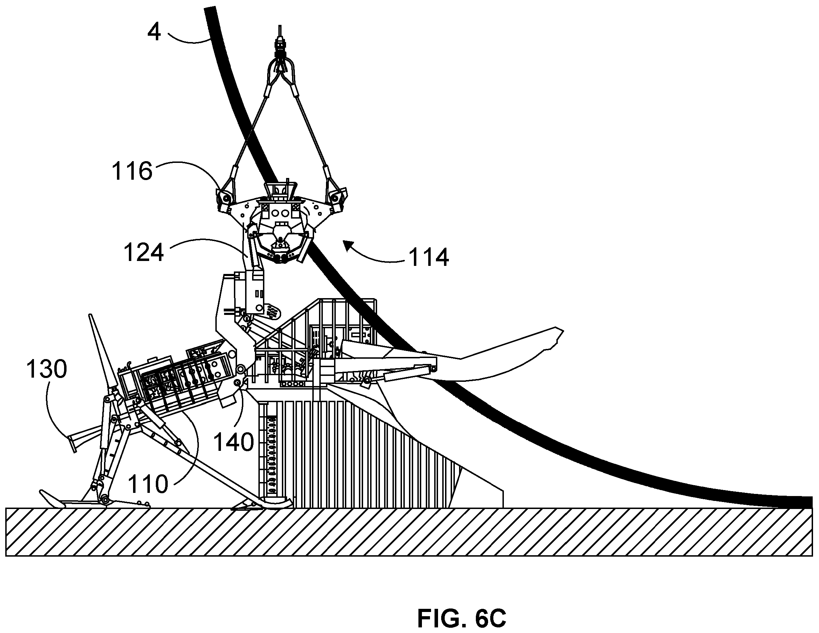

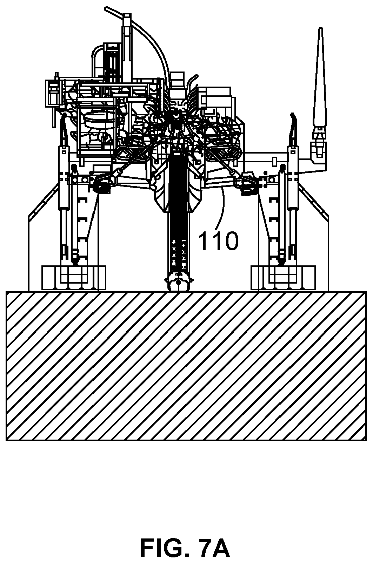

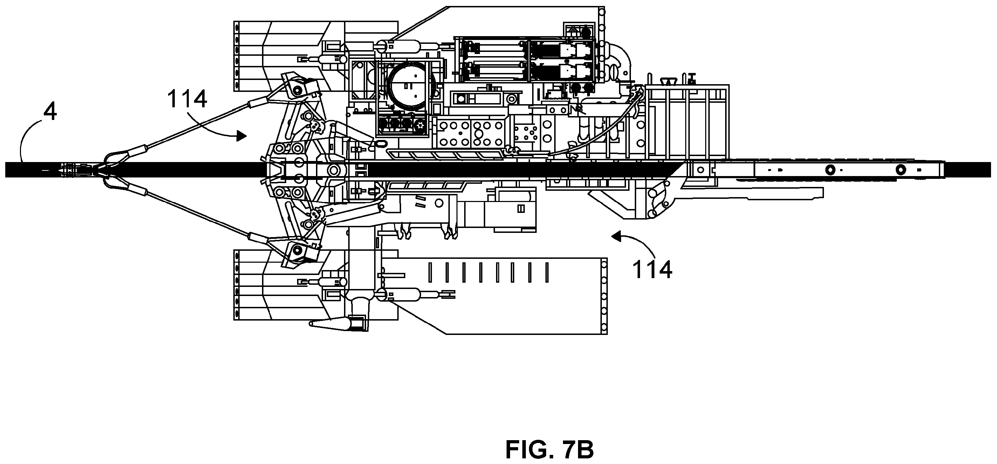

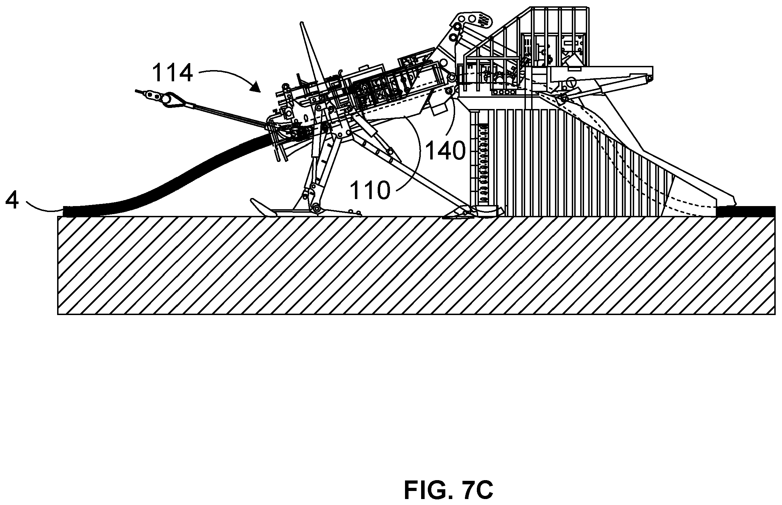

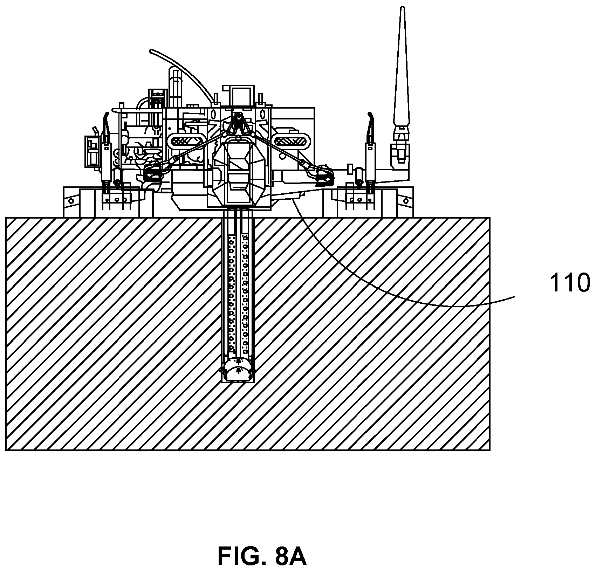

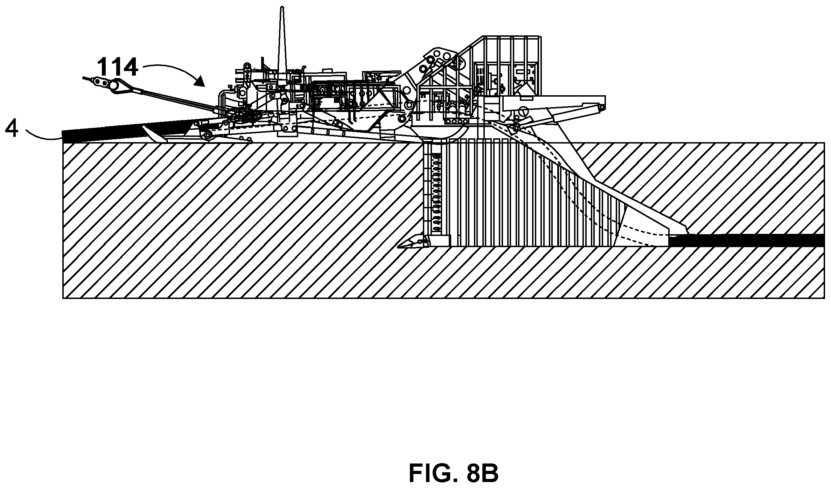

Referring to Figures 5 to 8, a plough 102 of a second embodiment is shown, in which parts common to the embodiment of Figures 1 to 4 are denoted by like reference numerals but increased by 100. In the plough 102 of Figures 5 to 8, the attachment part 116 of the drawbar 114 is pivotable relative to the support member 124 between the second position (Figure 5) and the third position (Figure 6) to provide access to the cable path 126 from above to enable the cable 4 to loaded into the cable path 126.

In addition, the plough body 110 is pivotable relative to the plough share 112 about pivot axis 140, which enables the height of the bellmouth 130 to be adjusted. This enables the bellmouth entry height to be minimised during shallow trenching or in transitioning to and from full depth, as a result of which the trench depth can be greater.

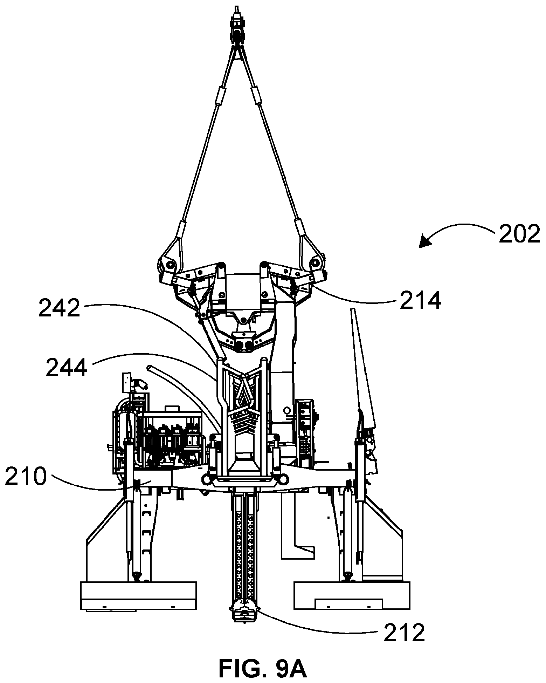

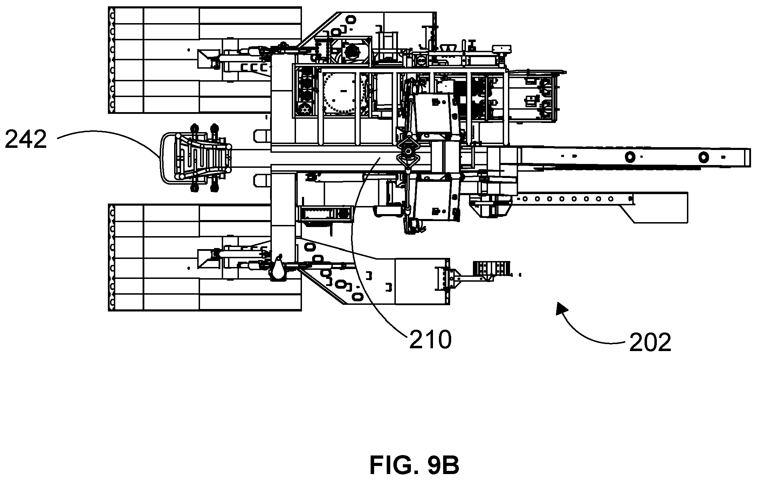

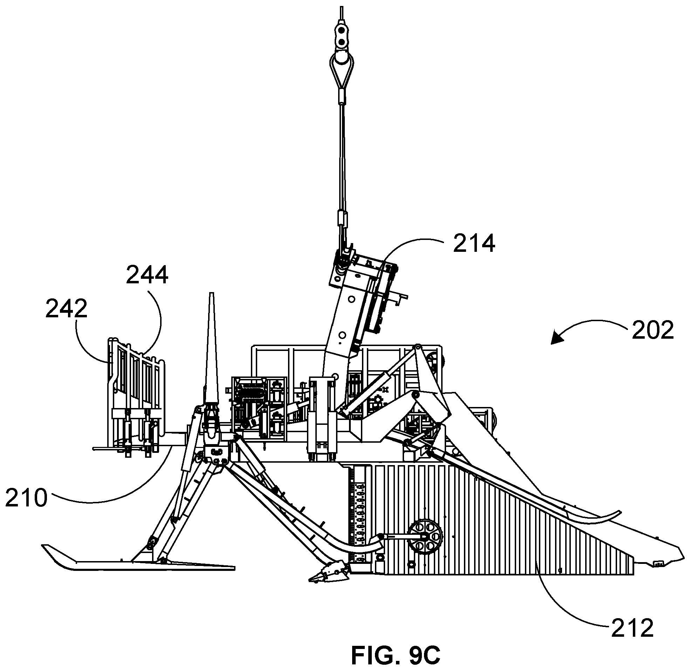

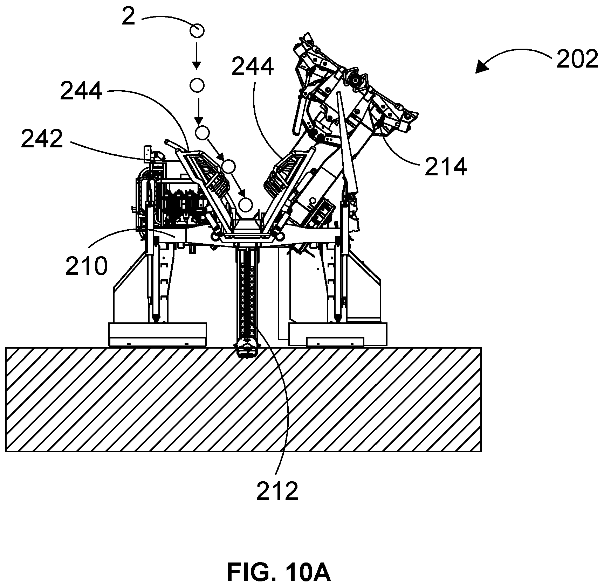

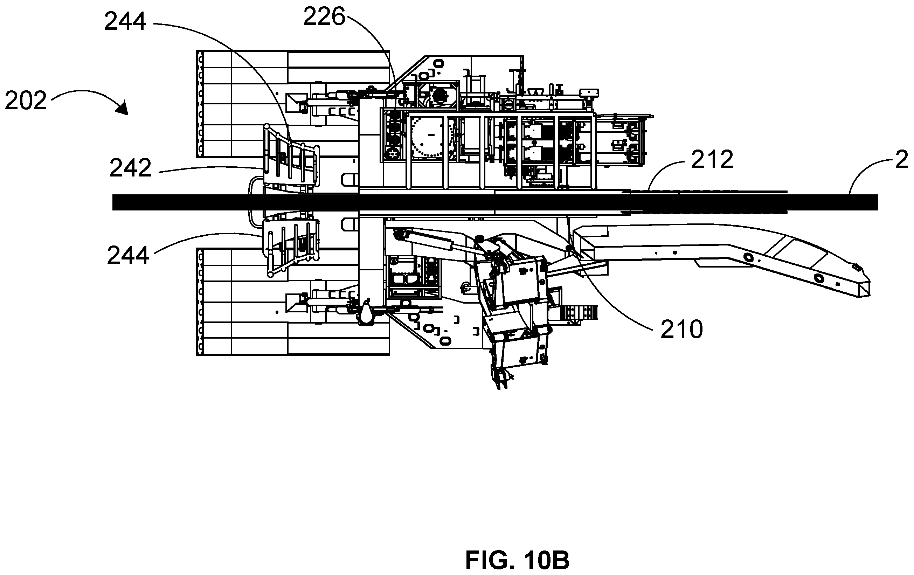

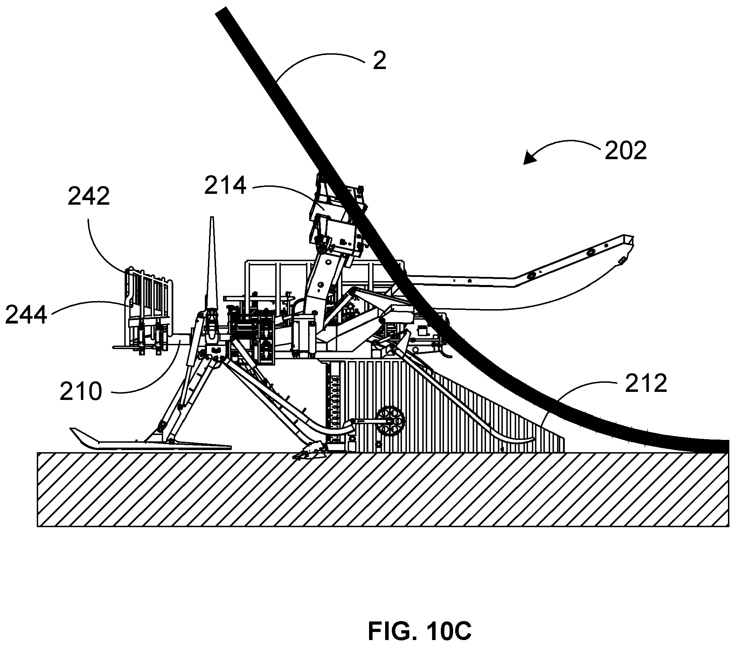

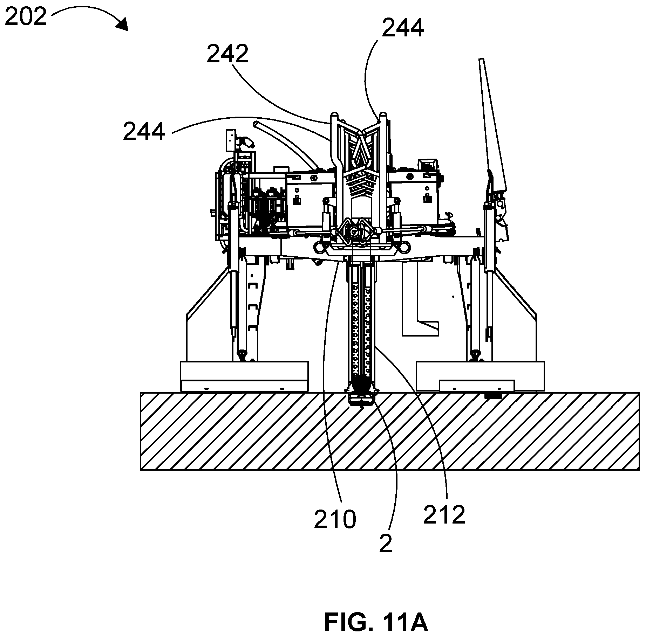

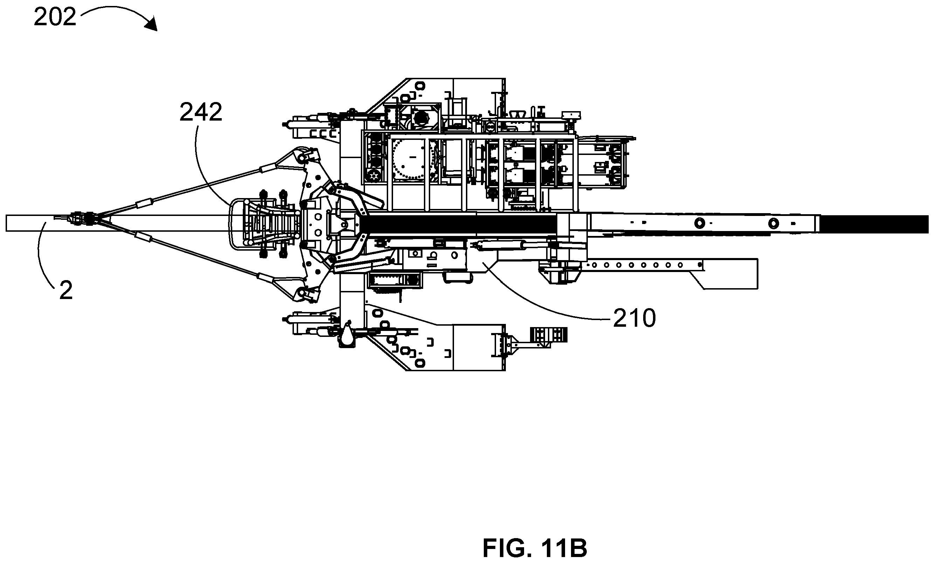

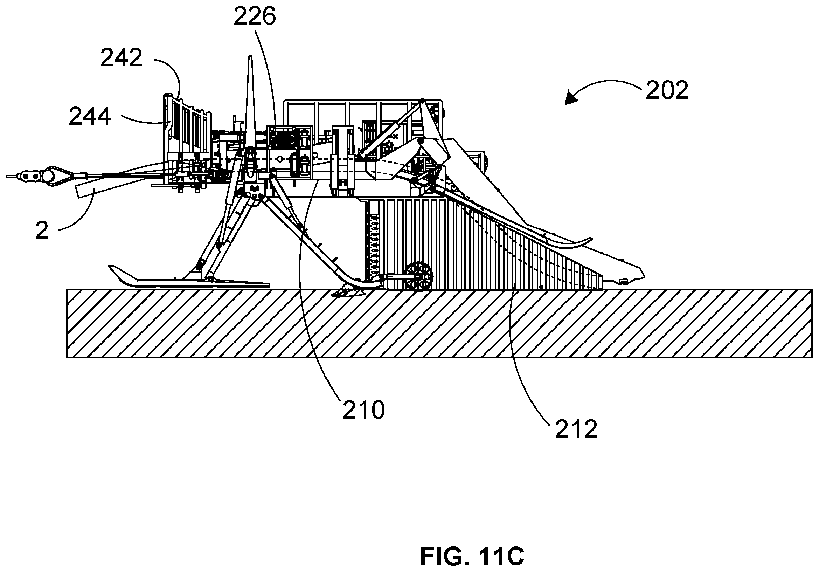

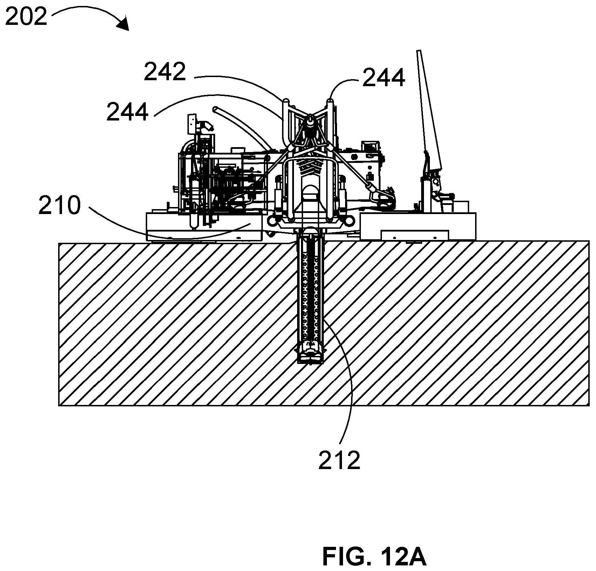

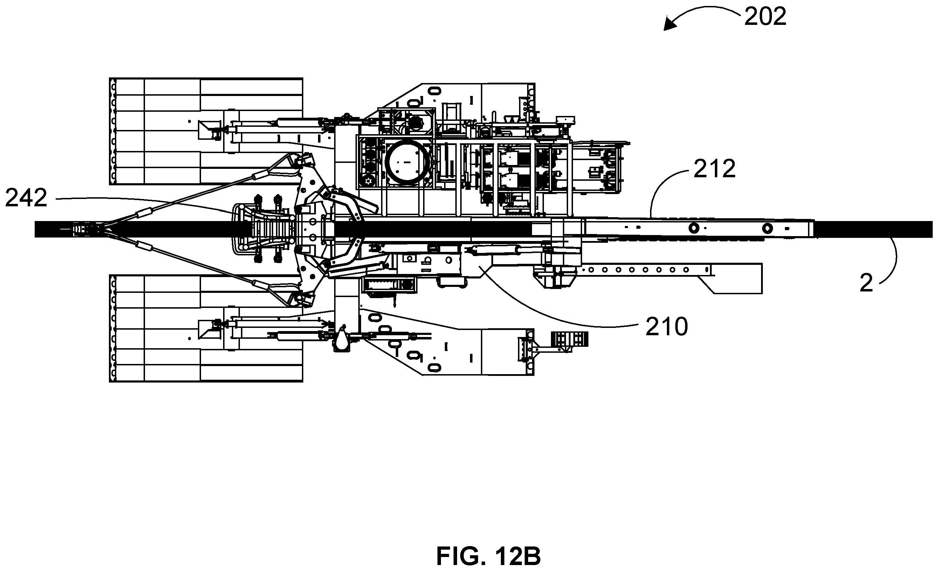

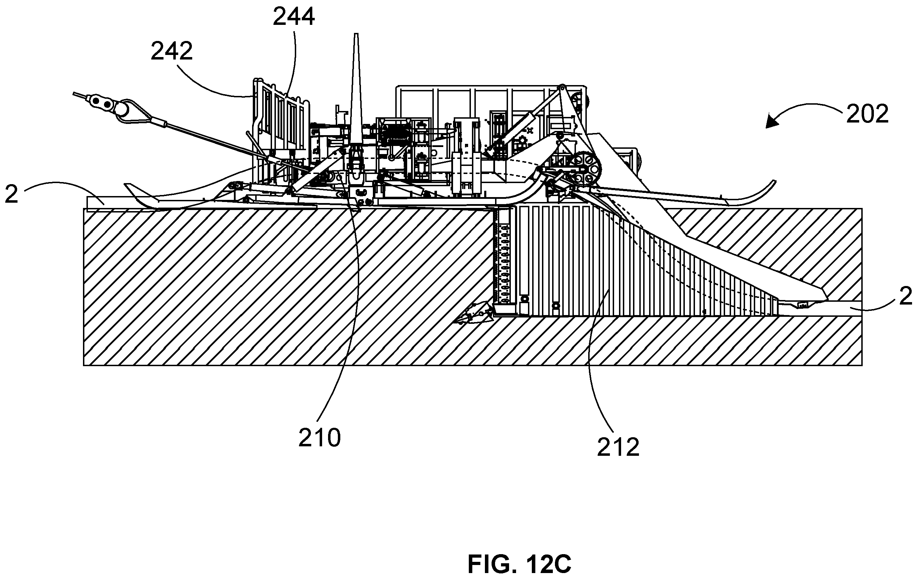

Referring to Figures 9 to 12, a plough 202 of a third embodiment is shown, in which parts common to the embodiment of Figures 1 to 4 are denoted by like reference numerals but increased by 200. The plough 202 of Figures 9 to 12 is provided with retaining means in the form of an opening bellmouth assembly 242 mounted to the body 210 of the plough 202 forward of the plough share 212. The bellmouth assembly 242 includes a pair of retaining members 244 mounted to the body 210 such that the retaining members 244 are pivotable between a released condition, in which the cable 2 can be inserted into the bellmouth assembly 242 from above the plough 202, and a retaining condition, in which the retaining members 244 retain the cable 4 in the bellmouth assembly 242 to prevent the cable 4 from being damaged by coming into contact with the drawbar 214 as the drawbar 214 is moved from its second position to its first position. In the released condition, the retaining members 244 also assist in guiding the cable 4 into the cable path 226 of the plough 202.

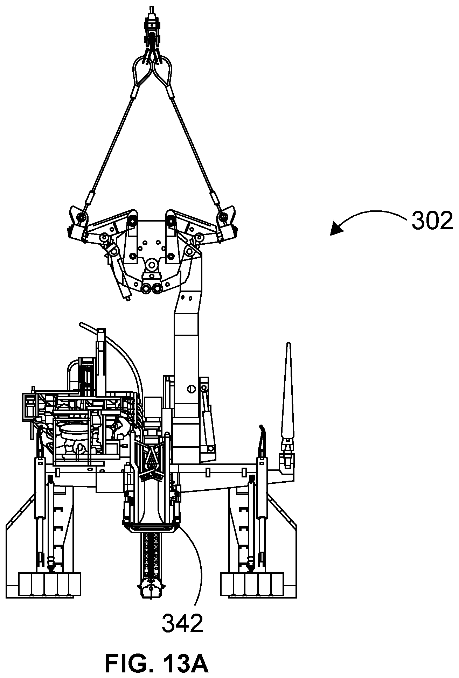

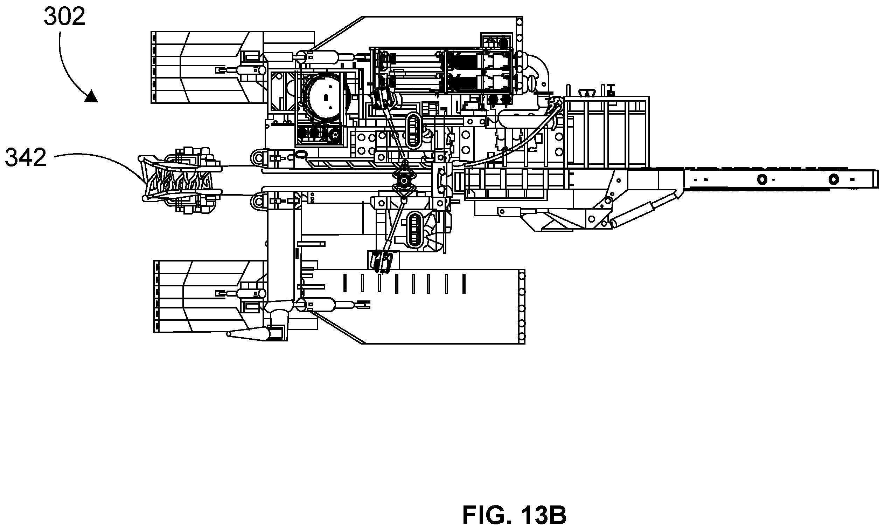

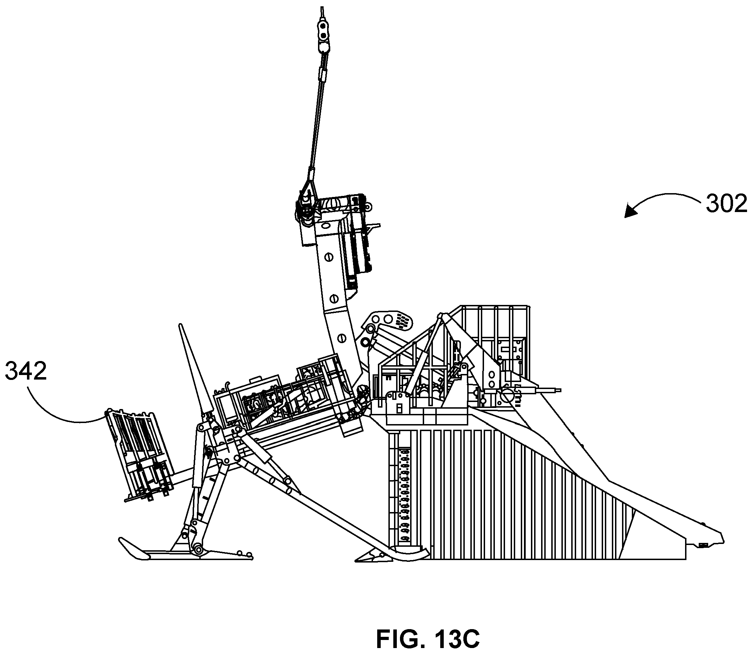

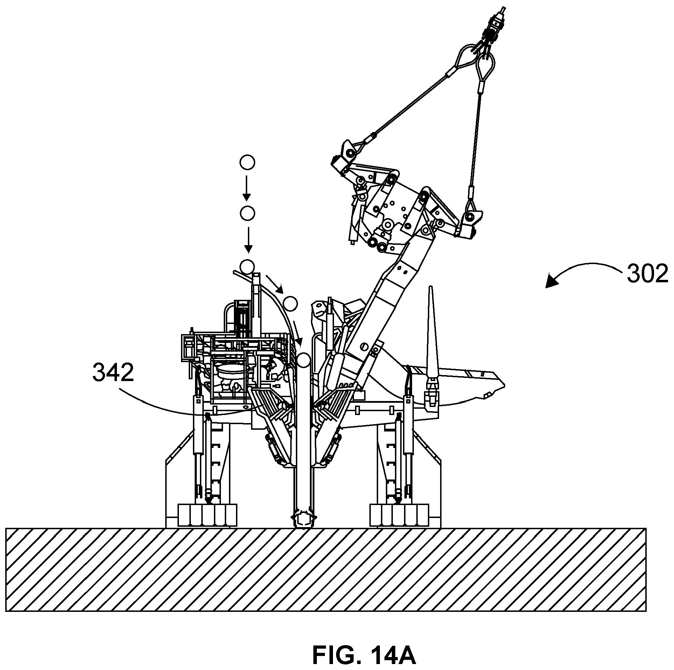

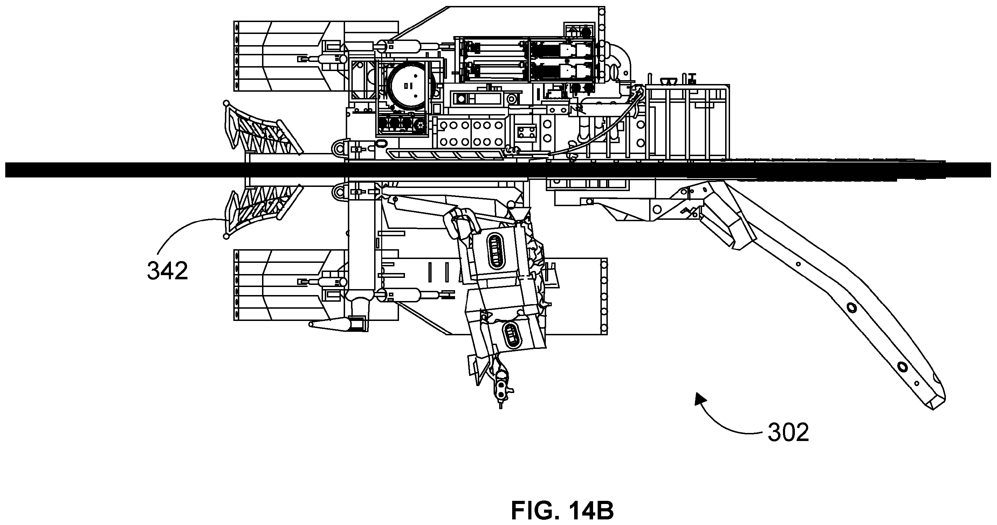

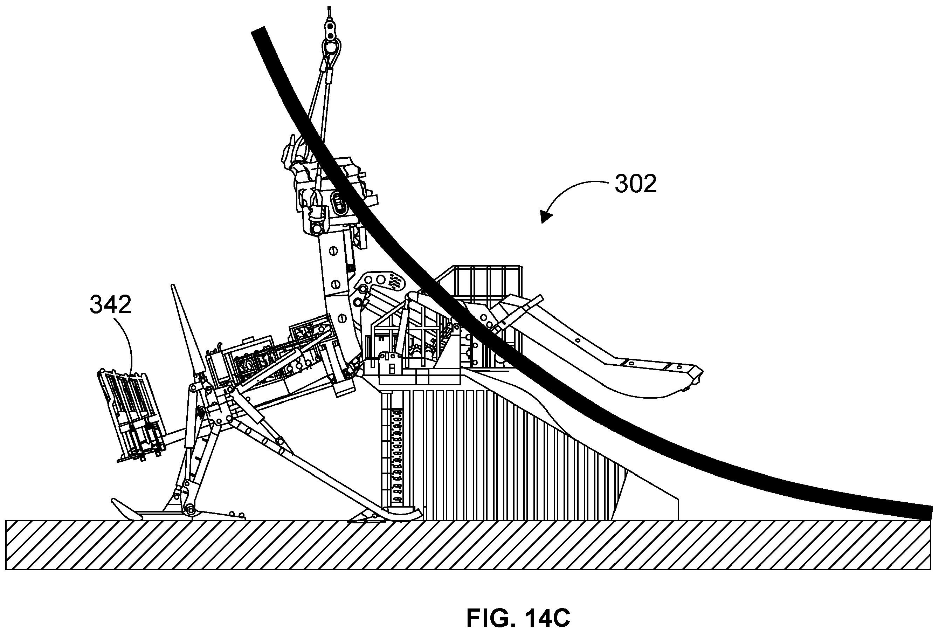

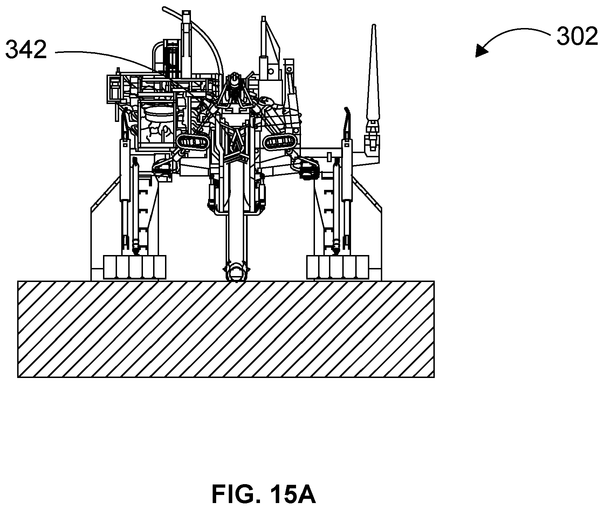

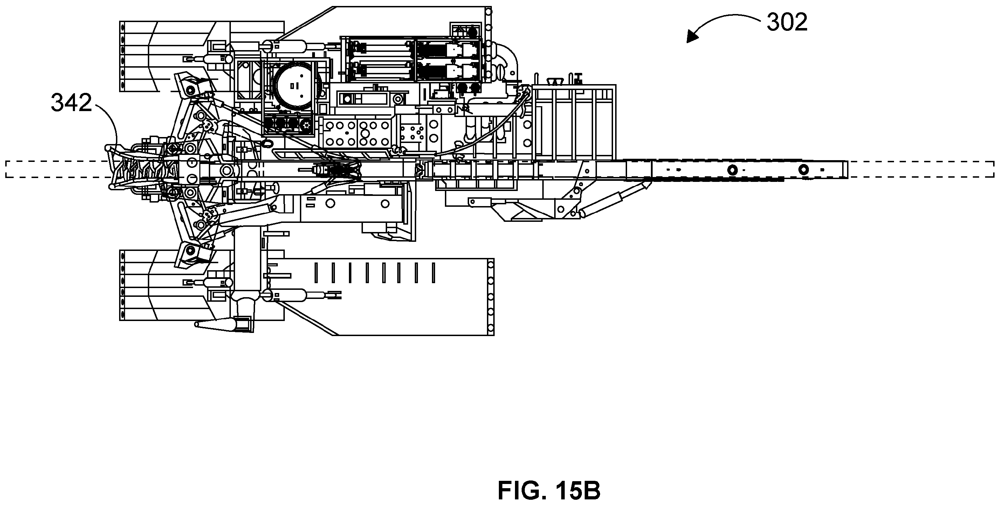

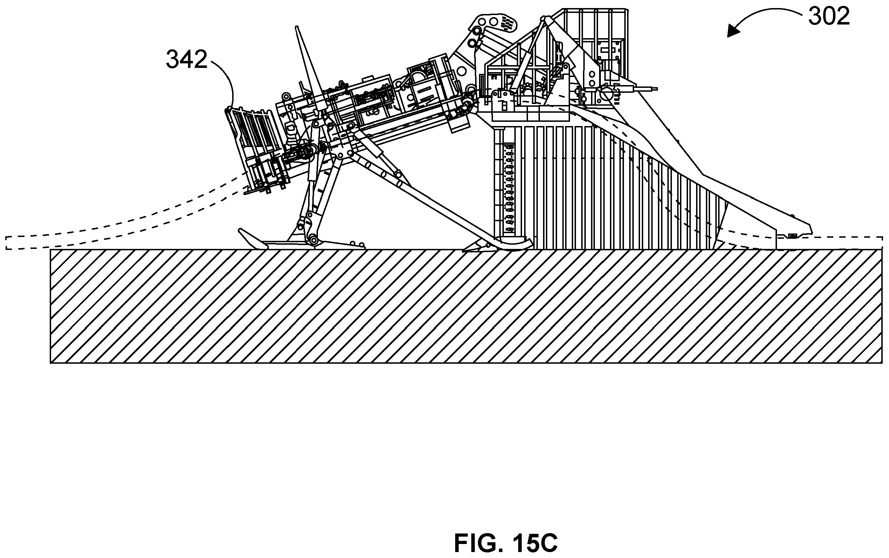

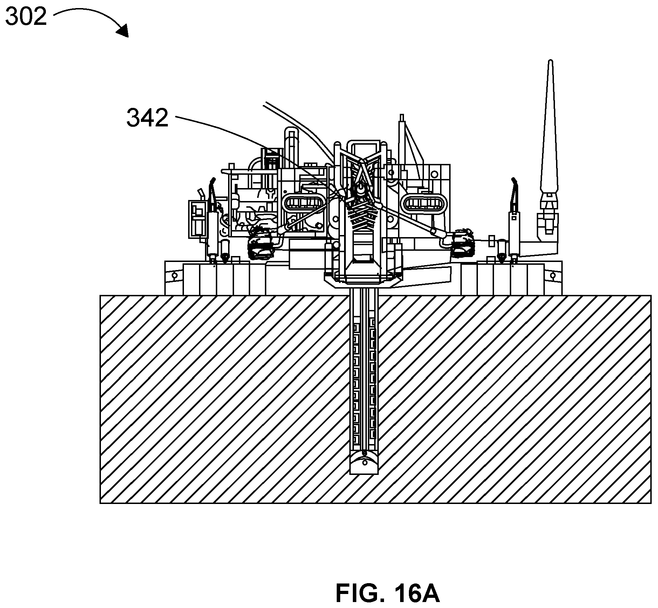

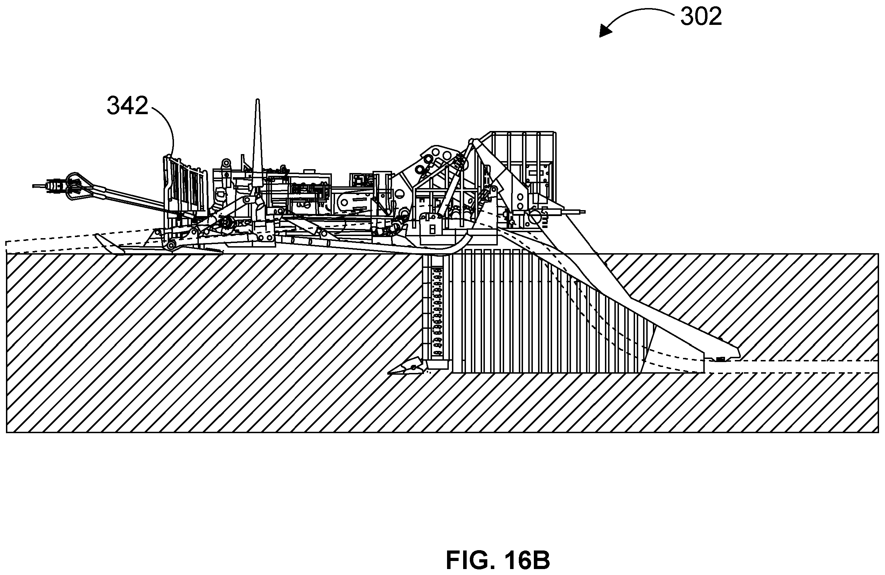

Referring to Figures 13 to 16, a plough 302 of a fourth embodiment is shown, in which parts common to the embodiment of Figures 5 to 8 are denoted by like reference numerals but increased by 200. The plough 302 of Figures 13 to 16 is provided with retaining means in the form of an opening bellmouth assembly 342, which operates in a similar manner to the bellmouth assembly 242 of Figures 9 to 12.

It will be appreciated by persons skilled in the art that the above embodiments have been described by way of example only and not in any limitative sense, and that various alterations and modifications are possible without departure from the scope of the disclosure as defined by the appended claims.

## Claims

1. An apparatus (2, 102) for inserting an elongate object (4) into a trench (6) in a floor (8) in a body of
water, the apparatus (2, 102) comprising:-
a body (10, 110);
trench-forming means mounted to the body (10, 110) for forming a trench (6) in a floor (8) of a body of water;
receiving means for receiving at least part of an elongate object (4) to be inserted into the trench (6) from a side of the body (10, 110) remote from the trench-forming means; and
retaining means mounted to the body (10, 110) forwards of the trench forming means and having a released condition, enabling insertion of an elongate object into the retaining means from a side of the body (10, 110) remote from the trench forming means, and a retaining condition, for retaining an elongate object (4) in the retaining means;
further comprising attachment means for enabling attachment of at least one tensile member to the apparatus, wherein the attachment means is moveable relative to the trench-forming means between a first position, in which the apparatus is adapted to be towed by at least one said tensile member to move the trench-forming means relative to the floor (8) of the body of water to form a trench therein, and a second position, in which the apparatus is adapted to be supported by at least one said tensile member to enable the apparatus to be deployed to the floor (8) of the body of water; and
receiving means for receiving at least part of an elongate object to be inserted into the trench;
wherein the attachment means is moveable relative to the trench-forming means between the second position and a third position, to enable at least part of the elongate object to be received in the receiving means from a side of the apparatus remote from the trench-forming means;
wherein the attachment means is pivotable
between the first and second positions; and, wherein the attachment means is pivotable between the second and third positions;
and further comprising urging means for urging the elongated object (4) into the trench (6) formed by the trench-forming means,
wherein the urging means is moveable between a fourth position in which the urging means is adapted to urge the elongate object into the trench formed by the trench-forming means, and a fifth position to enable at least part of the elongate object to be received in the receiving means from a side of the apparatus remote from the trench-forming means; and characterised,
wherein the urging means is mounted to the attachment means such that movement of the attachments means from the second position to the third position causes movement of the urging means from the fourth position to the fifth position.

2. An apparatus (2, 102) according to claim 1, wherein the retaining means comprises at least one retaining member mounted to the body (10, 110) and moveable between released and retaining conditions thereof.

3. An apparatus (2, 102) according to claim 2, including one or more of the following features:
(i) wherein at least one said retaining member is pivotably moveable between released and retaining conditions thereof;
(ii) wherein the retaining means is adapted to prevent the attachment means from coming into contact with an elongate object (4) retained in said retaining means in a retaining condition thereof;
(iii) wherein the attachment means is adapted to be attached to each of a plurality of tensile members at a respective location, and the position of at least one said location is adjustable relative to the trench-forming means;
(iv) further comprising guide means for guiding the elongate object (4) into the receiving means; or
further comprising bend limiting means for limiting bending of the elongate object (4) at an inlet to the receiving means.

4. An apparatus (2, 102) according to claim 3,
wherein a height of an inlet to the bend limiting means is adjustable relative to the trench-forming means.

5. An apparatus (2, 102) according to claim 4, including one or more of the following features:
(i) wherein the trench-forming means further comprises a plurality of nozzles (38) for emitting water jets; or
(ii) further comprising floor engaging means for engaging the floor (8) of the body of water.

6. An apparatus (2, 102) according to claim 5, including one or more of the following features:
(i) wherein a plurality of said nozzles (38) is selectively operable;
(ii) wherein the floor engaging means comprises a plurality of first floor engaging members for engaging the floor (8) of the body of water forwards of the trench-forming means; or
(iii) wherein the position of the floor engaging means relative to the trench-forming means is adjustable.

7. An apparatus (2, 102) according to claim 6, wherein the floor-engaging means further
comprises second floor engaging members for engaging the floor (8) of the body of water rearwardly of the first floor engaging means.

## Patentansprüche

1. Eine Vorrichtung (2, 102) zum Einfügen eines länglichen Objekts (4) in einen Graben (6) in einem Grund (8) in einem Wasserkörper, wobei die Vorrichtung (2, 102) Folgendes beinhaltet:
einen Körper (10, 110);
ein Grabenformungsmittel, das an dem Körper (10, 110) befestigt ist, zum Formen eines Grabens (6) in einem Grund (8) eines Wasserkörpers;
ein Aufnahmemittel zum Aufnehmen mindestens eines Teils eines länglichen Objekts (4), das in den Graben (6) eingefügt werden soll, von einer Seite des Körpers (10, 110), die von dem Grabenformungsmittel entfernt ist; und
ein Rückhaltemittel, das vor dem Grabenformungsmittel (12) an dem Körper (10, 110) befestigt ist und einen gelösten Zustand, der die Einfügung eines länglichen Objekts in das Rückhaltemittel von einer Seite des Körpers (10, 110), die von dem Grabenformungsmittel entfernt ist, ermöglicht, und einen Rückhaltezustand zum Zurückhalten eines länglichen Objekts (4) in dem Rückhaltemittel aufweist;
ferner beinhaltend ein Anbringungsmittel zum Ermöglichen der Anbringung mindestens eines Zugelements an der Vorrichtung, wobei das Anbringungsmittel relativ zu dem Grabenformungsmittel zwischen einer ersten Position, in der die Vorrichtung angepasst ist, um durch mindestens ein besagtes Zugelement geschleppt zu werden, um das Grabenformungsmittel relativ zu dem Grund (8) des Wasserkörpers zu bewegen, um darin einen Graben zu formen, und einer zweiten Position, in der die Vorrichtung angepasst ist, um durch mindestens ein besagtes Zugelement getragen zu werden, um zu ermöglichen, dass die Vorrichtung auf den Grund (8) des Wasserkörpers ausgebracht wird, bewegbar ist; und
ein Aufnahmemittel zum Aufnehmen mindestens eines Teils eines länglichen Objekts, das in den Graben eingefügt werden soll;
wobei das Anbringungsmittel relativ zu dem Grabenformungsmittel zwischen der zweiten Position und einer dritten Position bewegbar ist, um zu ermöglichen, dass mindestens ein Teil des länglichen Objekts von einer Seite der Vorrichtung, die von dem Grabenformungsmittel entfernt ist, in dem Aufnahmemittel aufgenommen wird;
wobei das Anbringungsmittel zwischen der ersten und der zweiten Position schwenkbar ist; und
wobei das Anbringungsmittel zwischen der zweiten und der dritten Position schwenkbar ist;
und ferner beinhaltend ein Druckmittel zum Drücken des länglichen Objekts (4) in den durch das Grabenformungsmittel geformten Graben (6),
wobei das Druckmittel zwischen einer vierten Position, in der das Druckmittel angepasst ist, um das längliche Objekt in den durch das Grabenformungsmittel geformten Graben zu drücken, und einer fünften Position zum Ermöglichen, dass mindestens ein Teil des länglichen Objekts von einer Seite der Vorrichtung, die von dem Grabenformungsmittel entfernt ist, in dem Aufnahmemittel aufgenommen wird, bewegbar ist; und **dadurch gekennzeichnet**,
wobei das Druckmittel an dem Anbringungsmittel befestigt ist, sodass die Bewegung des Anbringungsmittels aus der zweiten Position in die dritte Position eine Bewegung des Druckmittels aus der vierten Position in die fünfte Position bewirkt.

2. Vorrichtung (2, 102) gemäß Anspruch 1, wobei das Rückhaltemittel mindestens ein Rückhalteelement beinhaltet, das an dem Körper (10, 110) befestigt und zwischen einem gelösten Zustand und einem Rückhaltezustand davon bewegbar ist.

3. Vorrichtung (2, 102) gemäß Anspruch 2, die eines oder mehrere der folgenden Merkmale umfasst:
(i) wobei mindestens ein besagtes Rückhalteelement zwischen einem gelösten Zustand und einem Rückhaltezustand davon schwenkbar bewegbar ist;
(ii) wobei das Rückhaltemittel angepasst ist, um zu verhindern, dass das Anbringungsmittel in den Kontakt mit einem in dem Rückhaltemittel in einem Rückhaltezustand davon zurückgehaltenen länglichen Objekt (4) kommt;
(iii) wobei das Anbringungsmittel angepasst ist, um an einer jeweiligen Stelle an jedem einer Vielzahl von Zugelementen angebracht zu werden, und die Position mindestens einer besagten Stelle relativ zu dem Grabenformungsmittel anpassbar ist;
(iv) ferner beinhaltend ein Führungsmittel zum Führen des länglichen Objekts (4) in das Aufnahmemittel; oder
ferner beinhaltend ein Biegungsbegrenzungsmittel zum Begrenzen des Biegens des länglichen Objekts (4) an einem Einlass des Aufnahmemittels.

4. Vorrichtung (2, 102) gemäß Anspruch 3, wobei eine Höhe eines Einlasses in das Biegungsbegrenzungsmittel relativ zu dem Grabenformungsmittel einstellbar ist.

5. Vorrichtung (2, 102) gemäß Anspruch 4, die eines oder mehrere der folgenden Merkmale umfasst:
(i) wobei das Grabenformungsmittel ferner eine Vielzahl von Düsen (38) zum Ausstoßen von Wasserstrahlen beinhaltet; oder
(ii) die ferner ein Grundeingriffsmittel zum Eingreifen in den Grund (8) des Wasserkörpers beinhaltet.

6. Vorrichtung (2, 102) gemäß Anspruch 5, die eines oder mehrere der folgenden Merkmale umfasst:
(i) wobei eine Vielzahl der Düsen (38) selektiv betreibbar ist;
(ii) wobei das Grundeingriffsmittel eine Vielzahl von ersten Grundeingriffselementen zum Eingreifen in den Grund (8) des Wasserkörpers vor dem Grabenformungsmittel beinhaltet; oder
(iii) wobei die Position des Grundeingriffsmittels relativ zu dem Grabenformungsmittel einstellbar ist.

7. Vorrichtung (2, 102) gemäß Anspruch 6, wobei das Grundeingriffsmittel ferner zweite Grundeingriffselemente zum Eingreifen in den Grund (8) des Wasserkörpers hinter dem ersten Grundeingriffsmittel beinhaltet.

## Revendications

1. Un appareil (2, 102) pour insérer un objet allongé (4) dans une tranchée (6) dans un sol (8) dans une masse d'eau, l'appareil (2, 102) comprenant :
un corps (10, 110) ;
un moyen de formation de tranchée monté sur le corps (10, 110) pour former une tranchée (6) dans un sol (8) d'une masse d'eau ;
un moyen de réception pour recevoir au moins une partie d'un objet allongé (4) à insérer dans la tranchée (6) depuis un côté du corps (10, 110) distant du moyen de formation de tranchée ; et
un moyen de retenue monté sur le corps (10, 110) en avant du moyen de formation de tranchée et ayant un état libéré, permettant l'insertion d'un objet allongé dans le moyen de retenue depuis un côté du corps (10, 110) distant du moyen de formation de tranchée, et un état de retenue, pour retenir un objet allongé (4) dans le moyen de retenue ;
comprenant en outre un moyen de fixation pour permettre la fixation d'au moins un élément de traction à l'appareil, le moyen de fixation étant mobile par rapport au moyen de formation de tranchée entre une première position, dans laquelle l'appareil est conçu pour être remorqué par au moins un dit élément de traction pour mouvoir le moyen de formation de tranchée par rapport au sol (8) de la masse d'eau pour former une tranchée dans celui-ci, et une deuxième position, dans laquelle l'appareil est conçu pour être supporté par au moins un dit élément de traction pour permettre à l'appareil d'être déployé sur le sol (8) de la masse d'eau ; et
un moyen de réception pour recevoir au moins une partie d'un objet allongé à insérer dans la tranchée ;
dans lequel le moyen de fixation est mobile par rapport au moyen de formation de tranchée entre la deuxième position et une troisième position, pour permettre à au moins une partie de l'objet allongé d'être reçue dans le moyen de réception depuis un côté de l'appareil distant du moyen de formation de tranchée ;
dans lequel le moyen de fixation est pivotable entre les première et deuxième positions ; et,
dans lequel le moyen de fixation est pivotable entre les deuxième et troisième positions ;
et comprenant en outre un moyen de poussée pour pousser l'objet allongé (4) dans la tranchée (6) formée par le moyen de formation de tranchée,
dans lequel le moyen de poussée est mobile entre une quatrième position dans laquelle le moyen de poussée est conçu pour pousser l'objet allongé dans la tranchée formée par le moyen de formation de tranchée, et une cinquième position pour permettre à au moins une partie de l'objet allongé d'être reçue dans le moyen de réception depuis un côté de l'appareil distant du moyen de formation de tranchée ; et caractérisé,
dans lequel le moyen de poussée est monté sur le moyen de fixation de telle sorte que le mouvement du moyen de fixation de la deuxième position à la troisième position provoque le mouvement du moyen de poussée de la quatrième position à la cinquième position.

2. Un appareil (2, 102) selon la revendication 1, dans lequel le moyen de retenue comprend au moins un élément de retenue monté sur le corps (10, 110) et mobile entre des états libéré et de retenue de celui-ci.

3. Un appareil (2, 102) selon la revendication 2, incluant une ou plusieurs des caractéristiques suivantes :
(i) dans lequel au moins un dit élément de retenue est mobile de manière pivotable entre des états libéré et de retenue de celui-ci ;
(ii) dans lequel le moyen de retenue est conçu pour empêcher le moyen de fixation d'entrer en contact avec un objet allongé (4) retenu dans ledit moyen de retenue dans un état de retenue de celui-ci ;
(iii) dans lequel le moyen de fixation est conçu pour être fixé à chaque élément d'une pluralité d'éléments de traction à un emplacement respectif, et la position d'au moins un dit emplacement est réglable par rapport au moyen de formation de tranchée ;
(iv) comprenant en outre un moyen de guidage pour guider l'objet allongé (4) dans le moyen de réception ; ou
comprenant en outre un moyen de limitation de courbure pour limiter la courbure de l'objet allongé (4) au niveau d'une entrée menant au moyen de réception.

4. Un appareil (2, 102) selon la revendication 3,
dans lequel une hauteur d'une entrée menant au moyen de limitation de courbure est réglable par rapport au moyen de formation de tranchée.

5. Un appareil (2, 102) selon la revendication 4, incluant une ou plusieurs des caractéristiques suivantes :
(i) dans lequel le moyen de formation de tranchée comprend en outre une pluralité de buses (38) pour émettre des jets d'eau ; ou
(ii) comprenant en outre un moyen d'engagement avec le sol pour s'engager avec le sol (8) de la masse d'eau.

6. Un appareil (2, 102) selon la revendication 5, incluant une ou plusieurs des caractéristiques suivantes :
(i) dans lequel une pluralité desdites buses (38) est actionnable de manière sélective ;
(ii) dans lequel le moyen d'engagement avec le sol comprend une pluralité de premiers éléments d'engagement avec le sol pour s'engager avec le sol (8) de la masse d'eau en avant du moyen de formation de tranchée ; ou
(iii) dans lequel la position du moyen d'engagement avec le sol par rapport au moyen de formation de tranchée est réglable.

7. Un appareil (2, 102) selon la revendication 6, dans lequel le moyen d'engagement avec le sol comprend en outre des deuxièmes éléments d'engagement avec le sol pour s'engager avec le sol (8) de la masse d'eau en arrière du premier moyen d'engagement avec le sol.
